# EUROPÄISCHE PATENTSCHRIFT

(11) **EP 2 887 513 B1**
(45) Veröffentlichungstag und Bekanntmachung des Hinweises auf die Patenterteilung: **10.03.2021**
(21) Anmeldenummer: 14196056.7
(22) Anmeldetag: 03.12.2014
(51) Int. Cl.: H02K 41/02, B30B 1/40, B30B 1/10, B30B 1/26, H02K 16/00

(54) **Linearmotoranordnung und Werkzeugmaschine mit einer Linearmotoranordnung**
Linear motor assembly and machine tool with a linear motor assembly
Système de moteur linéaire et machine-outil dotée d'un système de moteur linéaire

(30) Priorität: 20.12.2013 DE 102013226826
(43) Veröffentlichungstag der Anmeldung: 24.06.2015
(73) Patentinhaber: Robert Bosch GmbH, 70442 Stuttgart (DE)
(72) Erfinder: Keller, Roland, 97241 Bergtheim (DE)

(56) Entgegenhaltungen:
- EP-A1- 0 044 892
- EP-A1- 2 527 058
- EP-B1- 1 299 200
- FR-A1- 2 461 577
- GB-A- 2 146 287
- JP-A- 2002 126 838
- US-A1- 2003 084 701
- US-A1- 2010 294 144

## Beschreibung

Die Erfindung geht aus von einer Linearmotoranordnung gemäß dem Oberbegriff des Anspruchs 1 und einer Werkzeugmaschine (Nibbelmaschine) mit einer derartigen Linearmotoranordnung.

In der EP 1 299 200 B1 ist eine Werkzeugmaschine mit einem Spindelantrieb offenbart. Über diesen ist ein Keilstück in horizontaler Richtung verschiebbar. Über das Keilstück ist ein Werkzeug der Werkzeugmaschine in vertikaler Richtung betätigbar.

Die EP 2 527 058 A1 zeigt eine ähnliche Werkzeugmaschine, mit der alternativ zum Spindelantrieb ein Linearmotor einsetzbar ist.

Die Druckschriften JP 2002 126 838 A und US 2003 008 47 01 A1 zeigen jeweils eine Linearmotoranordnung zum Werkstücktransport zwischen Stationen einer Transferpresse.

Die Druckschrift EP 0 044 892 A1 zeigt eine hydraulische Presse mit einem Hydrozylinder, über den ein Werkzeug quer zum Hub durch Kraftumlenkung an einem an einer schiefen Ebene abgleitenden Keil betätigt wird.

Die Druckschrift GB 214 62 87 A zeigt einen Druckplattenmechanismus, bei dem mittels Pneumatikzylindern und einer Kraftumlenkung an einer schiefen Ebene ein Abstand der Platten veränderbar ist.

Die Druckschrift FR 2 461 577 A1 zeigt eine Presse, insbesondere Schneid- oder Stanzpresse, bei der die Linearbewegung zur Betätigung des Werkzeugs mittels einem Spindeltrieb erzeugt wird. Dieser wirkt quer zur Linearbewegung des Werkzeugs auf eine Zahnradanordnung, über die die Linearbewegung des Spindeltriebs in die Linearbewegung des Werkzeugs umgelenkt wird.

Die Druckschrift US 2010 029 41 44 A1 zeigt eine Presse mit einer Linearmotoranordnung mit elektromotorischem Antrieb eines Schlittens in horizontaler Richtung. Der Schlitten ist über quer zu ihm angestellte und schwenkbar mit ihm gekoppelte Hebel mit einem Werkzeug gekoppelt. Durch eine Linearbewegung des Schlittens wird so das Werkzeug in Querrichtung getrieben.

Demgegenüber liegt der Erfindung die Aufgabe zugrunde, eine Linearmotoranordnung zu schaffen, die einen kompakten Aufbau bei hohen verfügbaren Kräften und geringen bewegten Massen aufweist. Des Weiteren ist es Aufgabe der Erfindung, eine kompakte und vorrichtungstechnisch einfach ausgestaltete Werkzeugmaschine zu schaffen.

Die Aufgabe hinsichtlich der Linearmotoranordnung wird gelöst gemäß den Merkmalen des Anspruchs 1 und hinsichtlich der Werkzeugmaschine gemäß den Merkmalen des Anspruchs 14.

Sonstige vorteilhafte Weiterbildungen der Erfindung sind Gegenstand weiterer Unteransprüche.

Erfindungsgemäß ist eine Linearmotoranordnung für eine Werkzeugmaschine - insbesondere eine Punching Machine, eine Nibbelmaschine oder eine Stanzmaschine - vorgesehen. Des Weiteren ist denkbar, dass es sich bei der Werkzeugmaschine um eine Presse zum Bearbeiten von Werkstücken, insbesondere Blechen, handelt (Sheet Fabrication Center). Die Linearmotoranordnung hat zumindest einen elektrischen Linearmotor, der einen Schlitten aufweist. Dieser ist über eine Linearführung in eine Längsrichtung insbesondere etwa senkrecht zu einer Achse eines Werkzeugs (Stanzwerkzeug) verschiebbar geführt. Auf voneinander weg weisenden Schlittenseiten (Großseiten) des Schlittens ist jeweils eine Sekundäreinheit festgelegt. Einer jeweiligen Sekundäreinheit ist gegenüberliegend eine gehäusefeste Primäreinheit zugeordnet. Eine jeweilige Sekundäreinheit steht mit der ihr zugeordneten Primäreinheit derart in Wirkverbindung, dass der Schlitten in beide Längsrichtungen verschiebbar ist. Über den Schlitten ist eine etwa senkrecht zu seinen Schlittenseiten wirkende Betätigungskraft auf das Werkzeug aufbringbar. Beim Aufbringen der Betätigungskraft ist der Schlitten über die Linearführung abgestützt. Auftretende Lagerkräfte können somit von der Linearführung ausgenommen werden.

Diese Lösung hat den Vorteil, dass eine derartige Linearmotoranordnung vorrichtungstechnisch äußerst einfach und kompakt ausgestaltet ist und zugleich hohe Betätigungskräfte aufbringen kann.

Mit Vorteil ist die Sekundäreinheit eine Magnetanordnung und die Primäreinheit eine Wicklungsanordnung. Da nicht die Wicklungsanordnung, sondern die Magnetanordnung am Schlitten befestigt ist, können elektrische Leitungen zur Stromversorgung und Steuerung des Linearmotors gehäusefest angeordnet werden und sind somit durch den Schlitten nicht mitbewegt.

Die Linearführung (Profilschienenführung) weist zwei etwa parallel zueinander angeordnete, sich in Längsrichtung erstreckende Führungsschienen auf. Diese sind mit dem Schlitten fest verbunden. Eine jeweilige Führungsschiene ist hierbei in zumindest einem gehäusefesten Führungswagen, vorzugsweise jeweils zwei Führungswägen, geführt. Da die Führungsschienen üblicherweise ein geringeres Gewicht als die Führungswägen aufweisen, ist es somit äußerst vorteilhaft, die Führungsschienen und nicht die Führungswägen mit dem Schlitten zu verbinden, um eine bewegte Masse des Schlittens gering zu halten.

Die Linearführung ist vorzugsweise derart ausgestaltet, dass sie eine vergleichsweise hohe Steifigkeit bei geringer Reibung aufweist. Es kann vorgesehen sein, bei der Linearführung Leichtlaufdichtungen zu verwenden.

In weiterer Ausgestaltung hat der Schlitten einen Betätigungsabschnitt mit einer Betätigungsseite, über die das Werkzeug mit der Betätigungskraft beaufschlagbar ist. Im Bereich des Betätigungsabschnitts ist zumindest ein weiterer Führungswagen oder sind zumindest zwei weitere Führungswägen zur Abstützung vorgesehen. Somit hat die Linearführung vorzugsweise insgesamt vier oder sechs Führungswägen. Durch die Anordnung des Führungswagens oder der Führungswägen im Bereich des Betätigungsabschnitts können beim Aufbringen der Betätigungskraft auftretende Kräfte vergleichsweise direkt von der Linearführung aufgenommen werden, was eine Steifigkeit der Linearmotoranordnung erhöht.

Mit Vorteil übersteigt eine Länge die im Bereich des Betätigungsabschnitts angeordneten Führungswägen oder des im Bereich des Betätigungsabschnitts angeordneten Führungswagen in Längsrichtung eine Länge des Betätigungsabschnitts.

Das Aufbringen der Betätigungskraft auf das Werkzeug über den Betätigungsabschnitt erfolgt vorzugsweise außerhalb der Primäreinheit (Wicklungsanordnung).

Die Führungsschienen der Linearführung können seitlich am Schlitten fest angeordnet sein. Die Führungswägen sind somit ebenfalls seitlich am Schlitten vorgesehen.

Als Betätigungsabschnitt kann ein Endabschnitt des Schlittens vorgesehen sein.

Mit Vorteil sind die Primäreinheiten und die Sekundäreinheiten im Wesentlichen symmetrisch zum Schlitten angeordnet. Des Weiteren sind die wirkenden Magnetkräfte im Wesentlichen gleich. Somit wird die Linearführung entlastet, wodurch eine Reibung der Linearführung vermindert und eine Dynamik des Schlittens erhöht ist, zudem wird die Linearführung von den magnetischen Anziehungskräften entlastet. Dadurch können zum einen kleinere Linearführungen eingesetzt und/oder deren Lebensdauer erhöht werden.

Die Linearführungen sind vorzugsweise als Kugel- oder Rollenumlaufführungen ausgebildet. Sämtliche Lager sind somit Im Hinblick auf eine geringe Trägheit ausgewählt.

Für eine jeweilige Wicklungsanordnung kann ein Wicklungsgehäuse (Wicklungsplatte) vorgesehen sein. Eine jeweilige Magnetanordnung kann ebenfalls in einem plattenförmigen Gehäuse angeordnet sein, das fest mit dem Schlitten verbunden ist.

Durch die symmetrische Ausgestaltung des Linearmotors kann für beide Primärteile (Wicklungsanordnungen) ein gemeinsamer Antriebsregler eingesetzt werden. Dies führt zu Kosteneinsparungen, da nur ein Regler und nur ein Steuerteil notwendig sind.

Mit Vorteil ist ein Längenmesssystem (Wegmesssystem) vorgesehen, das in einem Bereich des Linearmotors angeordnet ist, in dem vergleichsweise geringe Vibrationen und Schwingungen auftreten. Bei einer derartigen Anordnung kann eine hohe Messgenauigkeit erreicht werden. Mit Vorteil ist das Längenmesssystem mit dem Antriebsregler in Wirkverbindung. Das Längenmessystem wird insbesondere zur Positionierung und zur Kommutierung des Linearmotors eingesetzt.

Vorzugsweise ist das Längenmesssystem weitestgehend vom Betätigungsabschnitt beabstandet. Beispielsweise kann es am vom Betätigungsabschnitt entfernten Endabschnitt des Linearmotors vorgesehen sein. Das Längenmesssystem ist somit nicht vorne am Werkzeug beziehungsweise Stanzkopf sondern am Kabelabgang des Linearmotors (Stanzkopf abgewandte Seite) angebracht. Das Längenmesssystem hat einen Aufnehmer, der insbesondere mit einem Wicklungsgehäuse seitlich verbunden ist. Alternativ kann er auch am Gehäuse der Maschine (Werkzeugmaschine) befestigt werden. Ein Wicklungsgehäuse hat beispielsweise vier Eckbereiche, wobei das Längenmesssystem somit am vom Betätigungsabschnitt entfernten Eckbereich an diesem befestigt ist. Ein Geber des Längenmesssystems ist mit Vorteil mit dem Schlitten verbunden. Der Schlitten kann zumindest auf einer Seite aus dem Wicklungsgehäuse mit dem Schlittenabschnitt auskragen, wobei der Geber dann auf dem auskragenden Schlittenabschnitt befestigt ist. Der Geber kann beispielsweise als Massverkörperung oder Massband ausgestaltet sein.

In weiterer Ausgestaltung der Erfindung sind die mit den Führungsschienen des Schlittens verbundenen Führungswägen im Querschnitt gesehen etwa U-förmig ausgestaltet und in einer Richtung geöffnet, in die die Betätigungsseite etwa weist. Somit sind die Führungswägen etwa in einer sich senkrecht zu den Schlittenseiten erstreckenden Richtung geöffnet. Entgegengesetzt zur Betätigungskraft weisen die Führungswägen somit große Lagerflächen auf.

Bevorzugter Weise ist eine zweite Linearführung im Bereich des Betätigungsabschnitts zum Stützen des Schlittens vorgesehen. Diese kann zumindest einen fest mit dem Schlitten verbundenen Führungswagen aufweisen, der auf einer gehäusefesten Führungsschiene geführt ist. Durch die zweite Linearführung ist auf einfache Weise eine verbesserte Abstützung im Bereich der Krafteinleitung der Betätigungskraft geschaffen. Die erste Linearführung kann somit vergleichsweise klein ausgestaltet werden.

Die zweite Linearführung kann zwei auf der von der Betätigungsseite weg weisenden Seite des Betätigungsabschnitts des Schlittens zwei Führungswägen aufweisen, die jeweils mit einer gehäusefesten Führungsschiene geführt sind.

Die Führungswägen der zweiten Linearführung sind vorzugsweise im Querschnitt gesehen etwa U-förmig ausgebildet. Sie können in einer Richtung offen ausgebildet sein, die von der Betätigungsseite wegweist, was zu einer großflächigen Abstützung führt.

Auf der Betätigungsseite kann bei einem bevorzugten Ausführungsbeispiel ein Keil vorgesehen sein, auf den das Werkzeug (Betätigungselement) abstützbar ist. Dieser ist dabei derart angeordnet, dass bei einer Verschiebung des Schlittens in die erste Längsrichtung das Werkzeug mit der Betätigungskraft beaufschlagbar ist. Das Werkzeug kann bei Beaufschlagung mit der Betätigungskraft dann etwa senkrecht zu den Schlittenseiten weg vom Betätigungsabschnitt bewegt werden. Zum Zurückbewegen des Werkzeugs kann beispielsweise eine pneumatische Anordnung, ein Federelement oder eine Rückzugsmechanik vorgesehen sein.

Der Keil kann im Längsschnitt gesehen V-förmig mit zwei Keilflächen ausgebildet sein.

Es ist denkbar, dass das Werkzeug mit einem Stützelement verbunden ist, das im Längsschnitt gesehen ebenfalls V-förmig mit zwei Stützflächen ausgebildet ist. Eine jeweilige Keilfläche kann dann etwa parallel zu einer gegenüberliegenden Stützfläche angeordnet sein, wobei zwischen den Keilflächen und Stützflächen Wälzlager vorgesehen sind. Eine Reibung zwischen dem Schlitten und dem Werkzeug kann hierdurch beim Betätigen reduziert werden.

Mit Vorteil hat der Schlitten eine massenoptimierte Trägerplatte. Sie weist beispielsweise Ausfräsungen oder eine optimierte Geometrie auf. Die Trägerplatte kann beispielsweise als H-Profil ausgestaltet sein, wobei eine Dicke, eine Länge, eine Breite und eine Höhe des H-Profils massenoptimiert angepasst sind.

Die als H-Profil ausgebildete Trägerplatte hat vorzugsweise einen mittleren Verbindungssteg und zwei seitliche Stege, wobei der Verbindungssteg zwischen den Sekundäreinheiten angeordnet ist. Zur Gewichtsreduzierung kann in dem Verbindungssteg zumindest eine Aussparung oder eine Ausfräsung oder eine Mehrzahl von Aussparungen oder eine Mehrzahl von Ausfräsungen eingebracht sein. Die eine Aussparung oder die Mehrzahl von Aussparungen sind hierbei derart in die Trägerplatte eingebracht und ausgestaltet, dass sich deren Steifigkeit hin zu dem Betätigungsabschnitt des Schlittens erhöht.

Es ist denkbar, dass die Trägerplatte im Wesentlichen aus Faserverbundwerkstoffen (beispielsweise CFK) besteht, wodurch diese äußerst leicht ist.

In weiterer Ausgestaltung der Erfindung hat der Schlitten einen Verbindungsabschnitt, der zwischen dem Betätigungsabschnitt und einem die Sekundärteile aufweisenden Aktorabschnitt vorgesehen ist. Dieser kann derart ausgestaltet sein, dass eine Verschwenkbarkeit zum Betätigungsabschnitt relativ zum Aktorabschnitt zugelassen ist. Die Verschwenkbarkeit hat beispielsweise eine bestimmte Größe, die im Bereich zwischen 1/1000 und 1/10 mm liegen kann.

Der Verbindungsabschnitt kann Teil der Trägerplatte sein und zumindest eine Quernut aufweisen, die sich etwa senkrecht zur Längsrichtung erstreckt. Alternativ können zwei Quernuten vorgesehen sein, die diametral zueinander in den voneinander wegweisenden Schlittenseiten des Schlittens her in die Trägerplatte eingebracht sind. Es kann somit eine Einkerbung zwischen einem Motorabschnitt und einem Keilabschnitt als Festkörpergelenk vorgesehen sein.

Als Verbindungsabschnitt ist des Weiteren denkbar ein Stabelement (Rundstab) vorzusehen. Dieses kann dann den Betätigungsabschnitt mit dem Aktorabschnitt, also zwei Teile der Trägerplatte, miteinander verbinden. Hierdurch ist eine Verschwenkung in zwei Ebenen ermöglicht. Das Stabelement erstreckt sich vorzugsweise in Längsrichtung.

Bei einer weiteren bevorzugten Ausführungsform der Erfindung ist auf der Betätigungsseite des Befestigungsabschnitts eine Kulisse vorgesehen, in der ein Betätigungselement des Werkzeugs derart geführt ist, das bei einer Verschiebung des Schlittens in die erste Längsrichtung das Betätigungselement mit einer Betätigungskraft beaufschlagbar ist. Somit wird das Betätigungselement bei einer Verschiebung des Schlittens in die erste Längsrichtung weg von der Betätigungsseite bewegt und bei Verschiebung in die zweite Längsrichtung hin zur Betätigungsseite bewegt. Es ist somit kein zusätzliches Rückführelement für das Betätigungselement beziehungsweise für das Werkzeug notwendig.

Es ist denkbar in weiterer Ausgestaltung zwei Kulissen vorzusehen, die identisch ausgestaltet sind und etwa eine V-förmige Kulissenbahn aufweisen. Die Kulissen können in der Querrichtung gesehen hintereinander und beabstandet zueinander angeordnet sein. In den Kulissen kann ein Stab (Rundstab) geführt sein, der sich ebenfalls etwa in Querrichtung erstreckt. Zwischen den Kulissen kann am Stab das Werkzeug befestigt sein. Beim Verschieben des Schlittens bewegt sich somit der Stab entlang der V-förmigen Kulissenbahnen und wird somit entweder hin oder weg zur beziehungsweise von der Betätigungsseite bewegt.

Bei einer alternativen Ausführungsform der Erfindung kann auf der Befestigungsseite eine Verzahnung vorgesehen sein, die mit einer Verzahnung eines verschwenkbar gelagerten Betätigungselements kämmt. Über die Verzahnung ist das Betätigungselement bei einem Verschieben des Schlittens mit einer Betätigungskraft beaufschlagbar. Das Betätigungselement ist auf einer Schwenkachse gelagert, die sich quer zur Längsrichtung (horizontal) erstreckt. Beabstandet zur Schwenkachse ist das Werkzeug über eine verschwenkbar am Betätigungselement gelagerten Hebel verbunden wobei die Schwenkachse des Hebels im Parallelabstand zur Schwenkachse des Betätigungselements angeordnet ist. Eine Verschiebung des Schlittens führt somit zu einem Verschwenken der Schwenkachse des Hebels um die Schwenkachse des Betätigungselements, wodurch das Werkzeug hin zur Betätigungsseite oder weg von der Betätigungsseite verfahrbar ist.

Bevorzugter Weise kann bei einer Ausführungsform am Betätigungsabschnitt eine Kniehebelvorrichtung zum Betätigen des Betätigungselements beziehungsweise Werkzeugs vorgesehen sein.

Um entweder höhere Betätigungskräfte aufbringen zu können oder die von einem Linearmotor aufzubringenden Betätigungskräfte zu reduzieren, können zwei Linearmotoren vorgesehen sein. Diese sind vorzugsweise gleich ausgestaltet. Des Weiteren können sie jeweils entsprechend der vorstehend erläuterten Aspekte ausgestaltet sein. Schlitten der Linearmotoren sind beispielsweise etwa koaxial zueinander angeordnet. Zum Betätigen des Werkzeugs werden sie entweder aufeinander zu oder voneinander weg bewegt. Reaktionskräfte über ein Maschinengestell in ein Maschinenbett werden hierbei eliminiert.

Vorzugsweise teilen sich die zweite Linearführungen der Linearmotoren ihre Führungsschienen, was äußerst kostengünstig ist.

Die Linearmotoren können jeweils über ihren Befestigungsabschnitt mit einem Hebel an dem Werkzeug angreifen.

Ein jeweiliger Linearmotor hat vorzugsweise einen eigenen Antriebsregler, womit Regler, Steuerteile (als Master und Slave) und das Längenmesssystem für einen jeweiligen Linearmotor vorgesehen sind.

Es kann vorgesehen sein, dass zum Betätigen des Werkzeugs an einer jeweiligen Betätigungsseite eines jeweiligen Linearmotors ein Keil vorgesehen ist, die in Querrichtung gesehen nebeneinander angeordnet sind. Die voneinander wegweisenden Keilflächen der Keile liegen dabei vorzugsweise an dem Betätigungselement (Stabelement) des Werkzeugs an. Somit wird das Werkzeug von den Betätigungsseiten wegbewegt, wenn die Schlitten auseinander getrieben werden und hin zu den Betätigungsseiten bewegt, wenn die Schlitten aufeinander zu bewegt sind.

Mit Vorteil sind an einer jeweiligen Befestigungsseite eines jeweiligen Schlittens eine Mehrzahl von Keilen vorgesehen. Diese sind in Querrichtung gesehen beispielsweise wechselweise hintereinander angeordnet.

Erfindungsgemäß ist eine Werkzeugmaschine, insbesondere eine Nibbelmaschine oder Stanzmaschine mit einer Linearmotoranordnung gemäß einem der vorhergehenden Aspekte vorgesehen. Der Schlitten ist hierbei derart mit dem Werkzeug koppelbar, dass dieses beim Verschieben des Schlittens in eine erste Längsrichtung in Richtung ihrer Bearbeitungsachse verschoben wird. Die Bearbeitungsachse erstreckt sich hierbei etwa senkrecht zur Längsrichtung. Ist ein Stanzwerkzeug vorgesehen, so kann über den Schlitten das Stanzwerkzeug auf beziehungsweise durch ein zu verarbeitendes Blech gedrückt werden.

Im Folgenden werden bevorzugte Ausführungsformen der Erfindung anhand von Zeichnungen näher erläutert. Es zeigen:
Figur 1 in einer perspektivischen Darstellung eine Linearmotoranordnung gemäß einer ersten Ausführungsform,
Figur 2 in einer perspektivischen Darstellung eine Untersicht auf die Linearmotoranordnung aus Figur 1,
Figur 3 in einer perspektivischen Darstellung eine Linearmotoranordnung gemäß einer zweiten Ausführungsform,
Figur 4 in einer perspektivischen Darstellung eine Linearmotoranordnung gemäß einer dritten Ausführungsform,
Figur 5 in einer perspektivischen Darstellung eine Linearmotoranordnung gemäß einer vierten Ausführungsform
Figur 6 in einer perspektivischen Darstellung eine elektrische Ansteuerung der Linearmotoranordnung aus Figur 5,
Figur 7 in einer schematischen Längssicht die Linearmotoranordnung aus Figur 1 zusammen mit einem Stanzwerkzeug,
Figur 8 einen Teil der Linearmotoranordnung aus Figur 1,
Figur 9 in einer Seitenansicht einen Teil der Linearmotoranordnung gemäß einer fünften Ausführungsform,
Figur 10 in einer Seitenansicht einen Teil der Linearmotoranordnung gemäß einer sechsten Ausführungsform,
Figur 11 in einer Seitenansicht einen Teil der Linearmotoranordnung gemäß einer siebten Ausführungsform,
Figur 12 in einer Seitenansicht einen Teil der Linearmotoranordnung gemäß einer achten Ausführungsform,
Figur 13 in einer Seitenansicht die Linearmotoranordnung gemäß einer neunten Ausführungsform,
Figur 14 in einer Seitenansicht die Linearmotoranordnung gemäß einer zehnten Ausführungsform,
Figur 15a in einer Seitenansicht die Linearmotoranordnung gemäß einer elften Ausführungsform
Figur 15b in einer Untersicht einen Teil der Linearmotoranordnung aus Figur 15a,
Figur 16 in einer perspektivischen Darstellung die Linearmotoranordnung gemäß einer zwölften Ausführungsform,
Figur 17 in einer Seitenansicht einen Teil der Linearmotoranordnung gemäß einer dreizehnten Ausführungsform und
Figur 18 in einer Draufsicht die Linearmotoranordnung aus Figur 17.

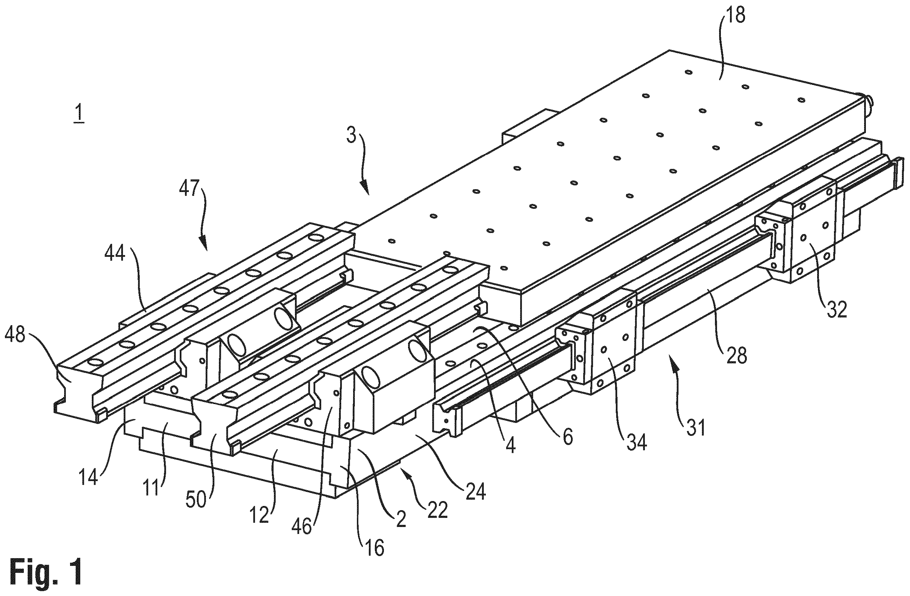

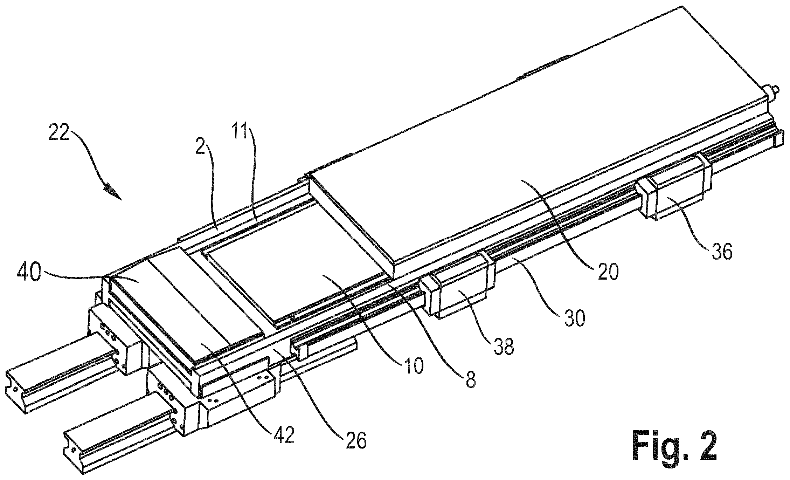

Gemäß Figur 1 ist eine sich etwa in horizontaler Richtung erstreckende Linearmotoranordnung 1 mit einem Linearmotor 3 für eine Nibbelmaschine dargestellt. Sie hat einen Schlitten 2 auf dessen obere Schlittenseite eine Sekundäreinheit in Form einer Magnetanordnung angeordnet ist. Auf seiner unteren Schlittenseite 8 ist gemäß Figur 2 eine weitere Sekundäreinheit in Form einer Magnetanordnung 10 vorgesehen. Gemäß Figur 1 hat der Schlitten 2 im Querschnitt gesehen eine Trägerplatte 11 mit einem H-Profil, die einen Verbindungssteg 12 und zwei seitliche Stege 14 und 16 aufweist. Die Magnetanordnungen 6 und 10 sind jeweils auf den Verbindungssteg 12 gesetzt und somit zwischen den Stegen 14 und 16 angeordnet. Die Magnetanordnungen 6 und 10 weisen jeweils ein etwa plattenförmiges Gehäuse auf, das mit dem Schlitten 2 vorzugsweise verschraubt ist. Gegenüberliegend von der Magnetanordnung 6 und beabstandet von diesem ist eine Primäreinheit in Form einer Wicklungsanordnung 18 vorgesehen. Des Weiteren ist gemäß Figur 2 der unteren Magnetanordnung 10 ebenfalls eine Primäreinheit in Form einer Wicklungsanordnung 20 zugeordnet. Die Wicklungsanordnungen 18 und 20 sind jeweils in einem etwa plattenförmigen Gehäuse ausgebildet, wobei der Schlitten 2 zwischen diesen angeordnet ist. Die Magnetanordnungen 6 und 10 enden jeweils in einer Längsrichtung gesehen an einem außerhalb der Wicklungsanordnungen 18 und 20 vorgesehenen Betätigungsabschnitt 22 des Schlittens 2.

Die Stege 14 und 16 haben jeweils voneinander (in Querrichtung) wegweisende seitliche Stegseiten 24 und 26, siehe auch Figur 2, an denen jeweils eine profilierte Führungsschiene 28 beziehungsweise 30 einer ersten Linearführung 31 festgelegt ist. Eine jeweilige Führungsschiene 28 und 30 ist jeweils in zwei Führungswägen 32, 34 beziehungsweise 36, 38, siehe Figur 2, gleitend geführt. Die Führungswägen 32, 34 und 36, 38 einer jeweiligen Führungsschiene 28 beziehungsweise 30 sind in Längsrichtung gesehen zueinander beabstandet. Sie sind im Querschnitt etwa U-förmig ausgebildet und greifen in die Profilierung der ihnen zugeordneten Führungsschiene 28 beziehungsweise 30 ein. Sie sind an einem nicht dargestellten Gehäuse oder Rahmen festgelegt.

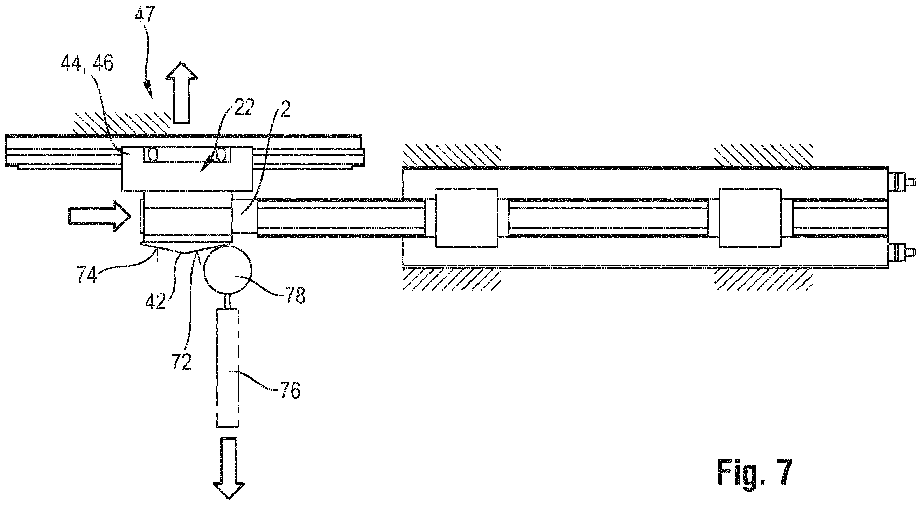

Gemäß Figur 2 hat der Betätigungsabschnitt 22 des Schlittens 2 eine Betätigungsseite 40 mit einem Keil 42, dessen Funktionsweise unten stehend anhand Figur 7 näher erläutert ist. Der Keil 42 dient zum Betätigen eines Werkzeugs der Werkzeugmaschine.

Gemäß Figur 1 sind am Betätigungsabschnitt 22 des Schlittens 2 auf seiner oberen Schlittenseite 4 zwei Führungswägen 44 und 46 einer zweiten Linearführung 47 angeordnet und fest mit dem Schlitten 2 verbunden. Ein jeweiliger Führungswagen 44 und 46 wirkt hierbei mit einer jeweiligen profilierten Führungsschiene 48 beziehungsweise 50 zusammen. Diese sind gehäusefest. Die zweite Linearführung 47 ist entsprechend der ersten Linearführung 31 ausgestaltet, allerdings ist die zweite Linearführung 47 größer ausgestaltet, da sie den Betätigungskräften (Stanzkräften) entgegenwirkt. Sie weist beispielsweise eine etwa doppelte Nenngröße auf. Über die zweite Linearführung kann sich der Schlitten 2 etwa senkrecht zu seiner Schlittenseite 4 im Bereich seines Betätigungsabschnitts 22 direkt abstützten, um beispielsweise einer Betätigungskraft entgegenzuwirken.

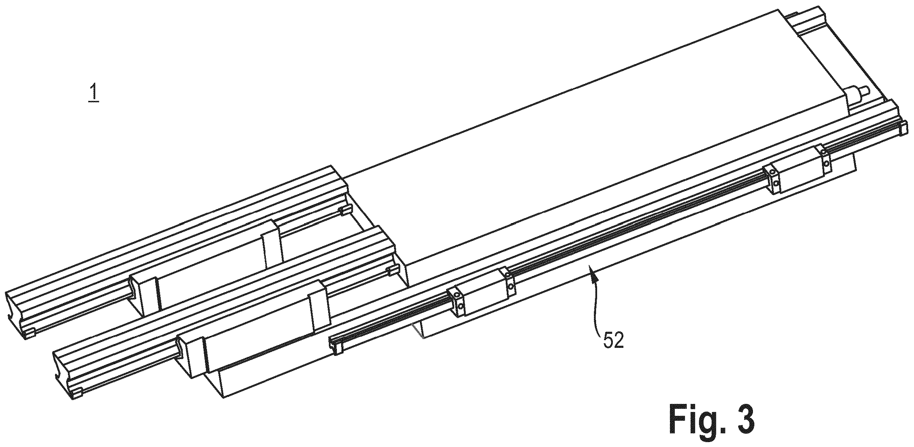

Bei der Ausführungsform gemäß Figur 3 hat der Linearmotoranordnung 1 eine alternative seitliche Linearführung 52, die kleiner und leichter ausgebildet ist. Diese ist hierbei vorzugsweise als Kugelschienenführung ausgestaltet, wobei die Linearführungen aus Figur 1 und 2 als Rollenschienenführung ausgebildet sein können.

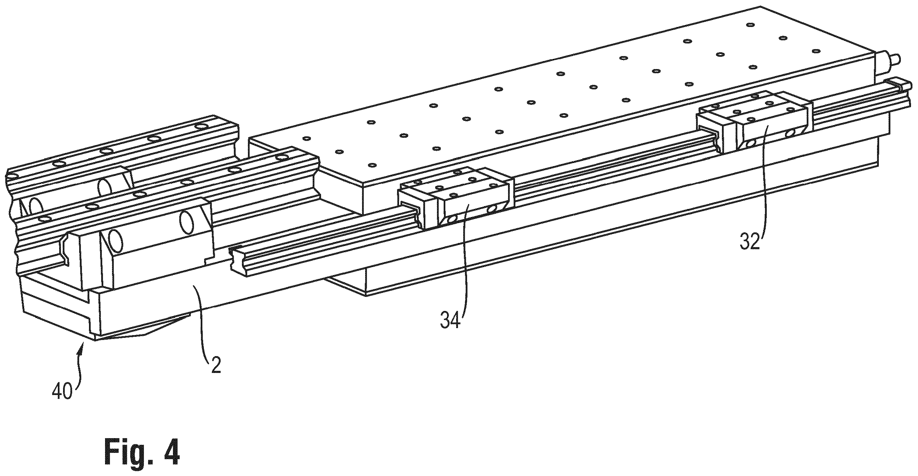

Gemäß Figur 4 ist die seitliche Linearführung im Unterschied zu den Figuren 1 und 2 derart ausgebildet, dass die seitlichen Führungswägen 32, 34 (und die nicht dargestellten seitlichen Führungswägen) mit ihrer offenen Seite in die gleiche Richtung wie die Betätigungsseite 40 weisen. Hierdurch ist eine Krafteinleitung verbessert. Des Weiteren ist eine Montage des Schlittens 2 vereinfacht.

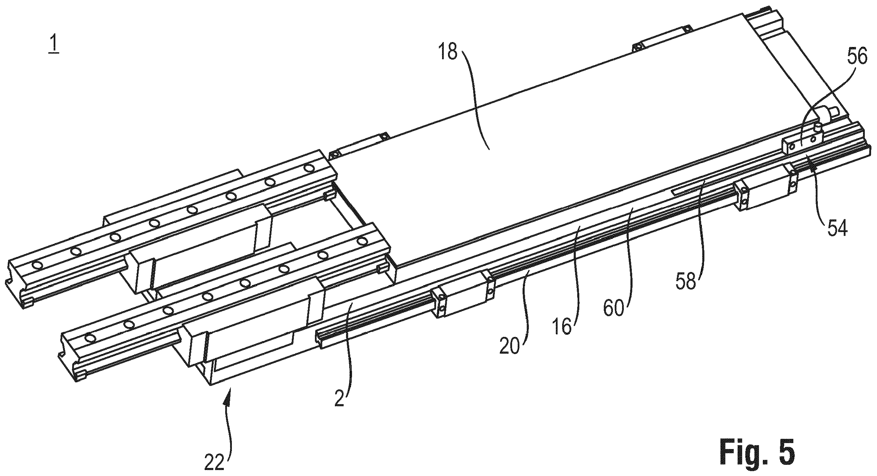

Die Linearmotoranordnung 1 aus Figur 5 weist zusätzlich ein Längenmesssystem 54 auf. Dieses hat einen Aufnehmer 56, der am Gehäuse der Wicklungsanordnung 18 seitlich befestigt ist. Die Befestigung erfolgt hierbei am vom Betätigungsabschnitt 22 des Schlittens 2 entfernten Endabschnitt des Gehäuses. Ein Geber 58 des Längenmesssystems 54 ist auf einer etwa zur Wicklungsanordnung 18 weisenden Stegseite 60 ausgebildet, die sich neben dem Gehäuse der Wicklungsanordnung 18 erstreckt. Mit dem Längenmesssystem 54 ist unter Berücksichtigung von Kinematiken zwischen dem nicht dargestellten Werkzeug und dem Schlitten 2 auch eine Position des Werkzeugs (Stanz- oder Nibbelkopf) erfassbar.

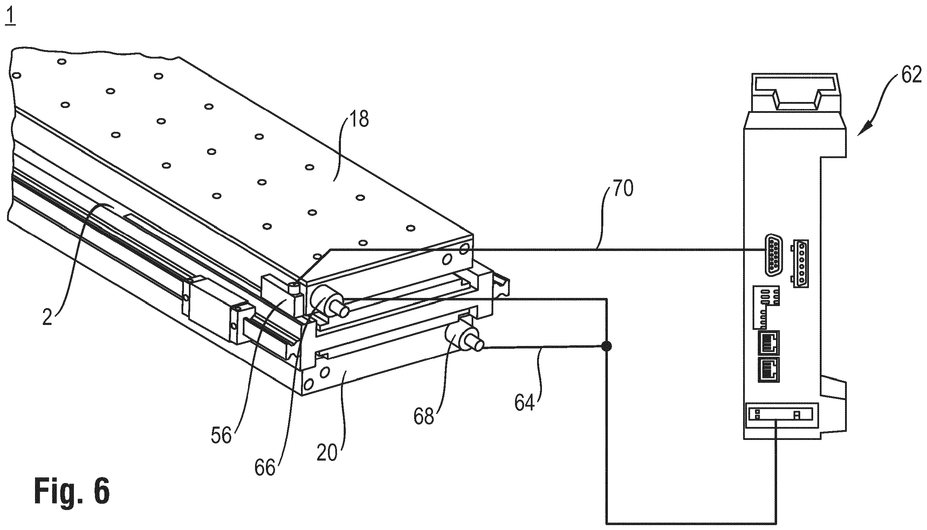

Die Figur 6 zeigt einen Antriebsregler 62 für die Linearmotoranordnung 1. Der Antriebsregler 62 ist über elektrische Leitungen 64 mit den Wicklungsanordnung 18 und 20 elektrisch verbunden. Da diese gehäusefest sind, werden die Leitungen 64 beim Verfahren des Schlittens 2 vorteilhafter Weise nicht mitbewegt. Die Leitungen 64 sind über einen Anschluss 66 mit der Wicklungsanordnung 18 und mit einem Anschluss 68 mit der Wicklungsanordnung 20 verbunden. Der Aufnehmer 56 ist über eine elektrische Leitung 70 ebenfalls mit dem Antriebsregler 62 verbunden, wobei diese ebenfalls statisch verlegt ist.

Gemäß Figur 7 ist der Keil 42 erkennbar. Dieser hat eine erste und zweite Keilfläche 72 und 74, die im Längsschnitt gesehen etwa V-förmig ausgestaltet sind. Ein Werkzeug 76 (Stanzwerkzeug) ist entlang einer Bearbeitungsachse, die sich etwa senkrecht zur Längsachse des Schlittens 2 (in Vertikalrichtung) erstreckt, verschiebbar geführt. An der Keilfläche 72 stützt sich das Werkzeug 76 mit einem Wälzkörper 78 oder Gleitkörper ab. Ein Neigungswinkel der Keilflächen 72 und 74 beträgt etwa 5,7°, was einer Übersetzung von 1:10 entspricht. Selbstverständlich kann der Keil 42 auch andere Winkel aufweisen. Es ist auch denkbar die Keilflächen 72, 74 kurvenförmig für eine veränderbare Übersetzung auszugestalten. Wird der Schlitten 2 gemäß Figur 7 in Längsrichtung eingefahren, so wird das Werkzeug 76 über die erste Keilfläche 72 und den Wälzkörper 78 mit einer Betätigungskraft beaufschlagt. Die hierbei auftretenden Reaktionskräfte werden weitestgehend von der im Bereich des Betätigungsabschnitts 22 angeordneten zweiten Linearführung 47 aufgenommen. Wird der Schlitten 2 entgegengesetzt ausgefahren, so wird das Werkzeug 76 entlastet. Eine Maximale von dem Linearmotor aus den Wicklungsanordnungen 18, 20 und den Magnetanordnungen 6 und 10 aufbringbare Kraft beträgt beispielsweise 20kN (hier 1:10), was zu einer maximalen Stanzkraft für das Werkzeug 76 von etwa 200 kN führt.

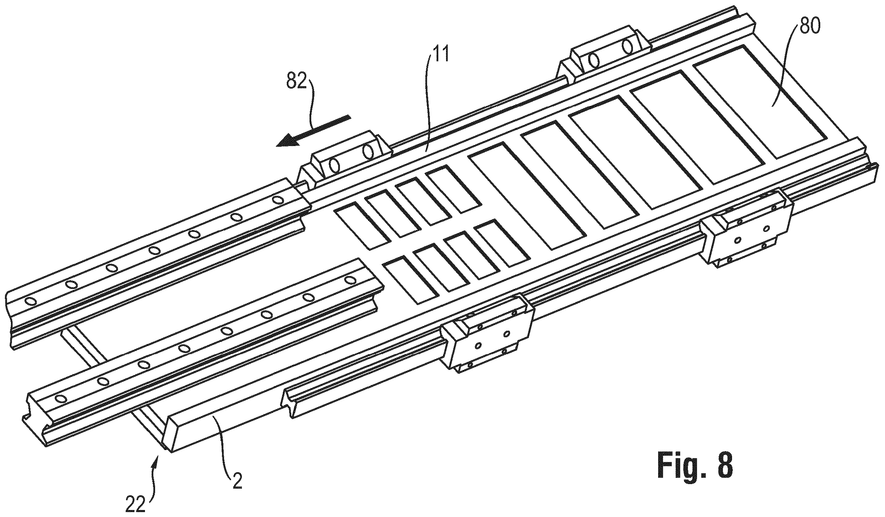

Figur 8 zeigt die Trägerplatte 11 des Schlittens 2. Diese weist hierbei Aussparungen 80 auf, die zu einer inhomogenen Massenverteilung führen. Eine bewegte Masse des Schlittens 2 lässt sich hierdurch deutlich reduzieren, womit eine Dynamik erhöht ist und der Linearmotor 3 vergleichsweise klein ausgestaltet werden kann. Die Aussparungen 80 sind beispielsweise durch Ausfräsungen gebildet. Da die Spannungen in der Trägerplatte 11 in einer Richtung 82 hin zum Betätigungsabschnitt 22 steigen, werden die Aussparungen in der Richtung 82 entsprechend kleiner.

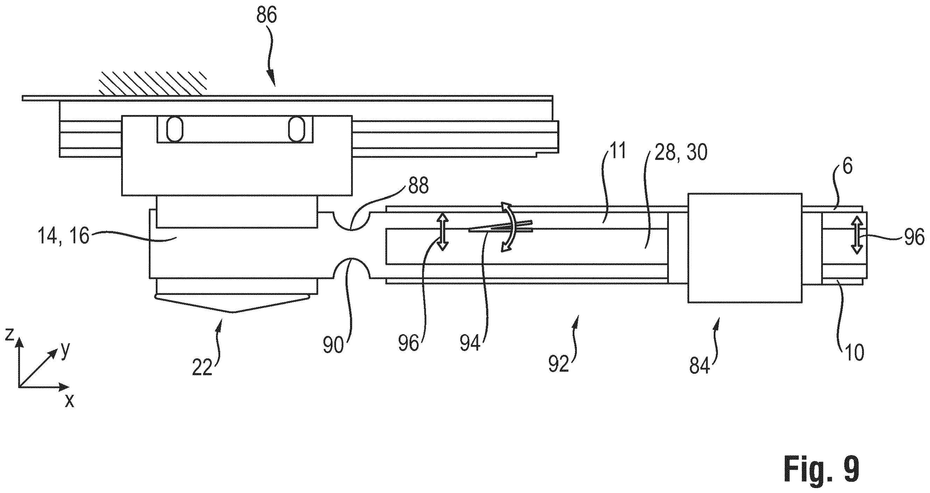

Zum Ausgleich von Montagefehler und Fertigungstoleranzen zwischen der ersten Linearführung 86 gemäß Figur 9 hat die Trägerplatte 11 zwei Einkerbungen 88 und 90. Diese sind zwischen dem Betätigungsabschnitt 22 und einem Aktorabschnitt 92 eingebracht. Der Aktorabschnitt 92 weist hierbei die Magnetanordnungen 6 und 10 und die Führungsschienen 28 und 30 auf. Mit den Einkerbungen 88 und 90, die beispielsweise in die Stege 14 und 16 eingebracht sind, ist ein Winkelfehler 94 und/oder Montagefehler (Fertigungstoleranzen) 96 zwischen dem Betätigungsabschnitt 22 und dem Aktorabschnitt 92 ausgleichbar. Bei den Linearführungen 84 und 86 handelt es sich um spielfreie Linearführungen. Bei einer Montage kann es zu Winkelfehlern 94 und Montagefehlern 96 beziehungsweise zu Montagetoleranzen zwischen den Linearführungen 84 und 86 kommen. Durch die Einkerbungen 88 und 90 können die Fehler 94 und 96 kompensiert werden.

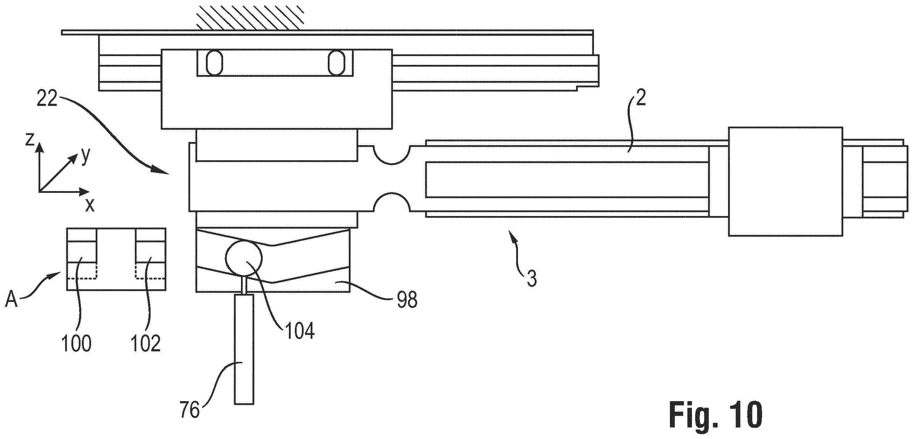

Gemäß Figur 10 weist der Schlitten 2 an seinem Betätigungsabschnitt 22 keinen Keil, sondern Kulissen 98 auf. In dem Querschnitt A durch die Kulissen 98 in Figur 10 ist deren Ausgestaltung ersichtlich. Diese haben zwei Kulissenbahnen 100 und 102, die in Querrichtung gesehen voneinander beabstandet sind. Zwischen den Kulissenbahnen erstreckt sich das Werkzeug 76 und ist an einen Wälzkörper 104 oder Gleitkörper befestigt. Der stabförmige Wälzkörper 104 erstreckt sich etwa in Querrichtung und ist in beiden Kulissenbahnen 100 und 102 verschiebbar geführt. Die Kulissenbahnen 100 und 102 sind im Längsschnitt gesehen etwa V-förmig ausgestaltet, womit bei einer Verschiebung des Schlittens 2 das Werkzeug 76 hin zum Betätigungsabschnitt 22 oder weg vom Betätigungsabschnitt 22 verfahrbar ist, um es zu entlasten oder zu belasten. Durch die Kulisse ist die Möglichkeit geschaffen, das Werkzeug (Stanzkopf) aktiv über den Linearmotor 3 zurückzuziehen.

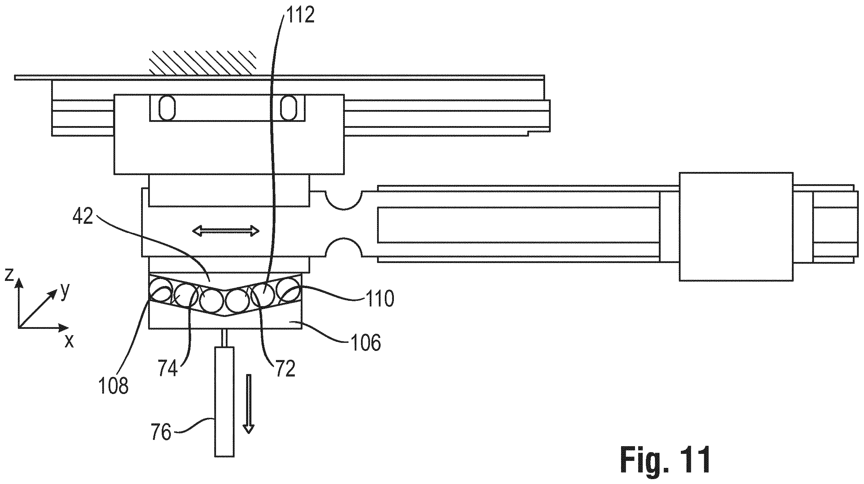

Gemäß Figur 11 ist zusätzlich zum Keil 42 ein Stützelement 106 vorgesehen. Dieses ist mit dem Werkzeug 76 verbunden. Es hat V-förmige Stützflächen 108 und 110, die entsprechend den Keilflächen 72 beziehungsweise 74 ausgestaltet sind. Zwischen den Stützflächen 108, 110 und den Keilflächen 72, 74 sind Wälzkörper 112 vorgesehen. Bei den Wälzkörpern 112 handelt es sich beispielsweise um kreiszylindrische Stäbe, die sich in Querrichtung erstrecken.

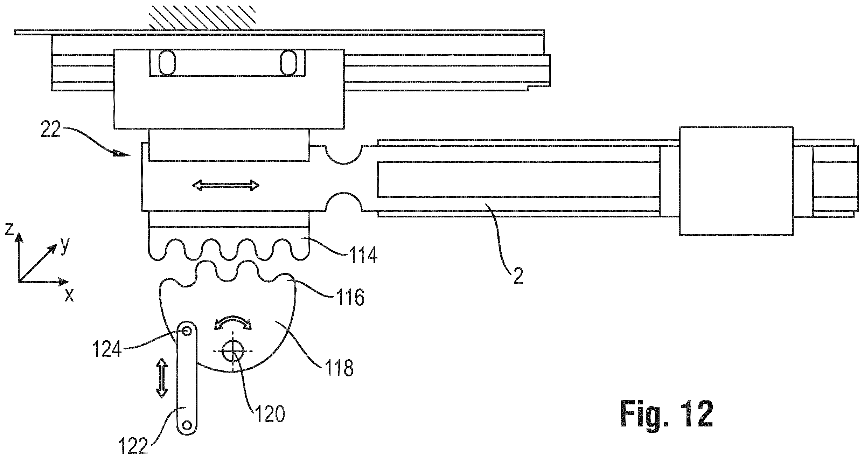

Bei der Ausführungsform in Figur 12 hat der Betätigungsabschnitt 22 eine Verzahnung 114. Diese kämmt mit einer Verzahnung 116 eines Betätigungselements 118, das auf einer Schwenkachse 120 verschwenkbar gelagert ist. Die Schwenkachse 120 erstreckt sich hierbei in Querrichtung. Beim Verfahren des Schlittens 2 in eine erste Längsrichtung wird das Betätigungselement 118 über die Verzahnungen 114, 116 in eine erste Richtung verschwenkt und beim Verfahren des Schlittens 2 in eine zweite Längsrichtung wird das Betätigungselement 118 über die Verzahnungen 114, 116 in eine zweite Schwenkrichtung verschwenkt. Am Betätigungselement 118 ist ein Hebel 122 schwenkbar gelagert, dessen Schwenkachse 124 im Parallelabstand zur Schwenkachse 120 angeordnet ist. Beim Verschwenken des Betätigungselements 118 wird somit die Schwenkachse 124 um die Schwenkachse 120 verschwenkt und der Hebel 122 entsprechend hin zum Betätigungsabschnitt 22 oder weg vom Betätigungsabschnitt 22 verfahren, um das nicht dargestelltes Werkzeug zu betätigen.

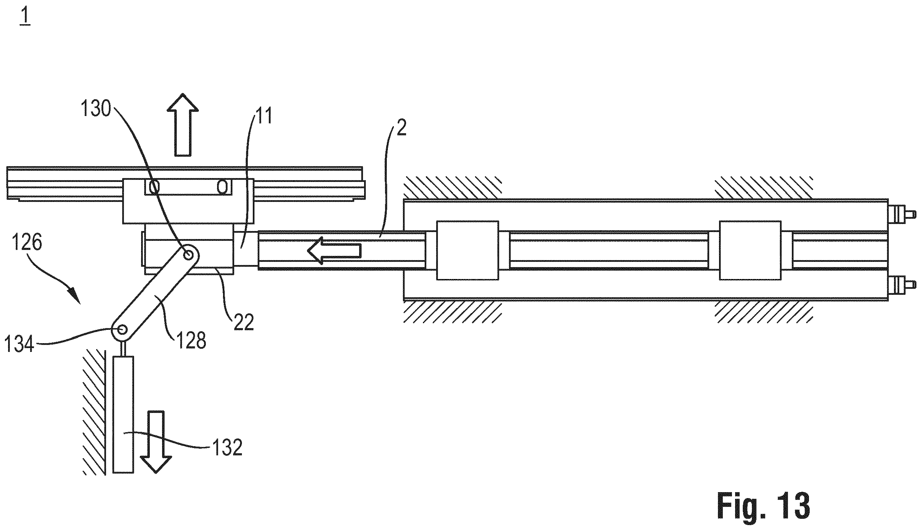

In Figur 13 hat die Linearmotoranordnung 1 am Befestigungsabschnitt 22 eine Kniehebelvorrichtung 126. Diese hat einen ersten Hebel 128, der verschwenkbar mit der Trägerplatte 11 verbunden ist. Seine Schwenkachse 130 erstreckt sich dabei quer zur Längsrichtung. Des Weiteren ist der Hebel 128 verschwenkbar mit dem Werkzeug 132 verbunden. Eine Schwenkachse 134 ist hierbei im Parallelabstand zur Schwenkachse 130 vorgesehen. Das Werkzeug 132 ist linear geführt in einer Richtung senkrecht zur Längs- und Querachse des Schlittens 2.

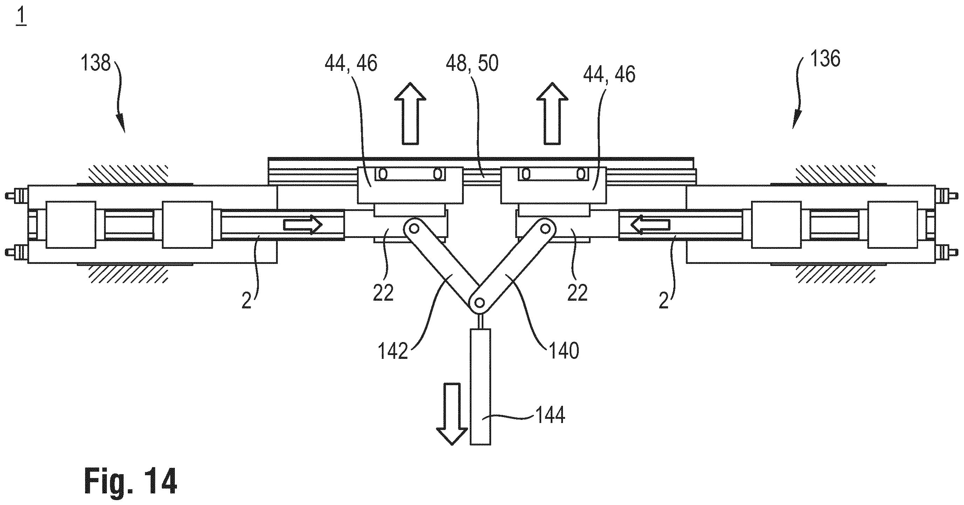

Gemäß Figur 14 hat die Linearmotoranordnung 1 einen ersten und zweiten Linearmotor 136, 138. Diese sind jeweils im Wesentlichen entsprechend dem Linearmotor 3 aus Figur 1 ausgebildet. Ihre Führungswägen 44 und 46 oberhalb ihres Betätigungsabschnitts 22 teilen sich die Führungsschienen 48 und 50. Somit sind die Linearmotoren 136 und 138 koaxial zueinander angeordnet. Im Unterschied zum Linearmotor aus Figur 1 ist am jeweiligen Betätigungsabschnitt 22 kein Keil, sondern jeweils ein Hebel 140, 142 verschwenkbar um eine Querachse gelagert. Ein jeweiliger Hebel 140 und 142 erstreckt sich jeweils weg von den Führungswägen 44 und 46. Endseitig sind die Hebel 114, 142 verschwenkbar verbunden. Zusätzlich ist endseitig der Hebel 140, 142 ein Werkzeug 144 verschwenkbar angeordnet. Werden die Schlitten 2 der Linearmotoren 136 und 138 aufeinander zubewegt, so wird das Werkzeug 144 über die Hebel 140 und 142 mit der Betätigungskraft beaufschlagt. Bei Verschiebung der Schlitten in entgegengesetzter Richtung, also in einer Richtung weg voneinander, wird das Werkzeug 144 entlastet. Dem Linearmotor 136 und 138 kann jeweils ein Antriebsregler zugeordnet sein.

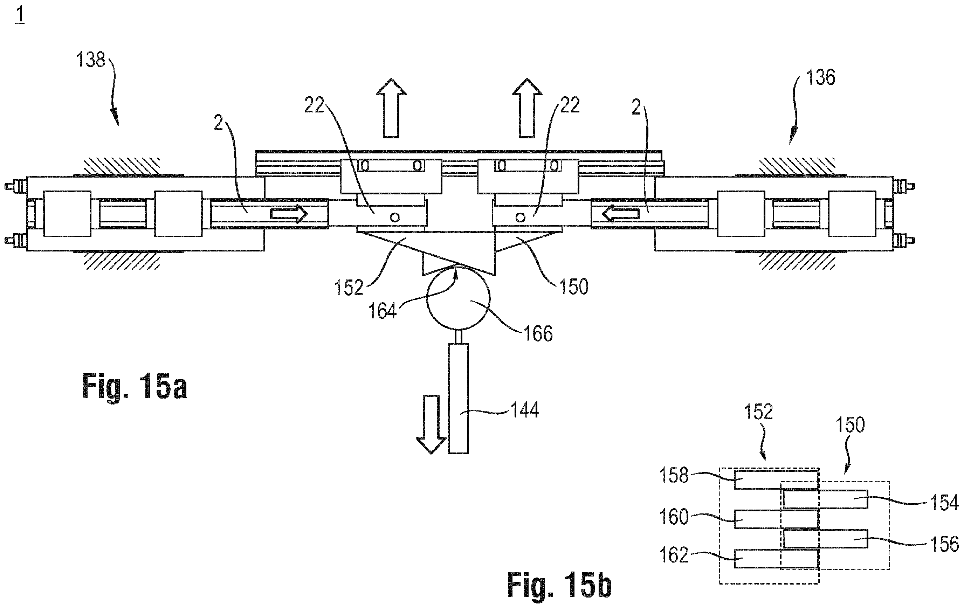

Gemäß Figur 15a ist eine Linearmotoranordnung 1 dargestellt, bei der im Unterschied zur Ausführungsform in Figur 14 anstelle von Hebeln Keilanordnungen 150 und 152 am Betätigungsabschnitt 22 des Linearmotors 136 beziehungsweise 138 vorgesehen ist.

Gemäß Figur 15b hat die Keilanordnung 150 zwei Keile 154 und 156 und die Keilanordnung 152 drei Keile 158 bis 162. In Querrichtung gesehen überdecken sich die Keile 154 bis 162 zumindest abschnittsweise. Im Überdeckungsbereich haben sie somit gemäß Figur 15a V-förmig zueinander angeordnete Keilflächen 164. Die Keile 154 bis 162 sind in Querrichtung gesehen wechselweise hintereinander angeordnet. Somit liegen die Keile 154 und 156 zwischen den Keilen 158 und 162. An die V-förmig angeordneten Keilflächen 164 liegt ein Wälzkörper 166 an, der vorzugsweise als Rundstab ausgebildet ist und sich in Querrichtung erstreckt. Mit diesem ist das Werkzeug 144 verbunden. Werden die Schlitten 2 der Linearmotoren 136 und 138 aufeinander zu bewegt, so wird das Werkzeug 144 entlastet. Werden Sie voneinander wegbewegt, so wird das Werkzeug 144 über die Keilanordnung 150, 152 mit der Betätigungskraft beaufschlagt.

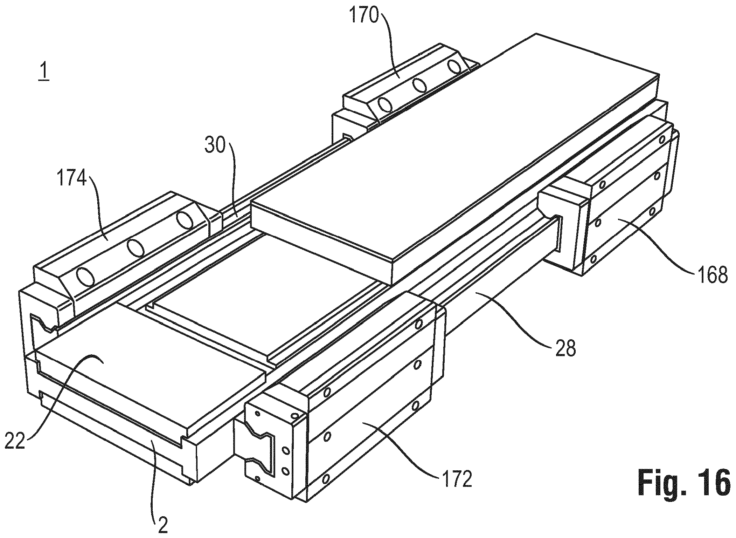

Gemäß Figur 16 hat die Linearmotoranordnung 1 im Unterschied zu den vorhergehenden Ausführungsformen insgesamt vier Führungswägen 168 bis 174. Die Führungswägen 168 und 172 wirken hierbei mit der Führungsschiene 28 des Schlittens 2 und die Führungswägen 170 und 174 mit der Führungsschiene 30 des Schlittens 2 zusammen. Es wird somit auf die überhalb des Betätigungsabschnitts 22 vorgesehene Linearführung verzichtet. Dafür sind die Führungsschienen 28 und 30 zusammen mit den Führungswägen 168 bis 170 vergleichsweise groß ausgebildet. Des Weiteren sind die vorderen Führungswägen 172 und 174 benachbart zum Betätigungsabschnitt 22 angeordnet.

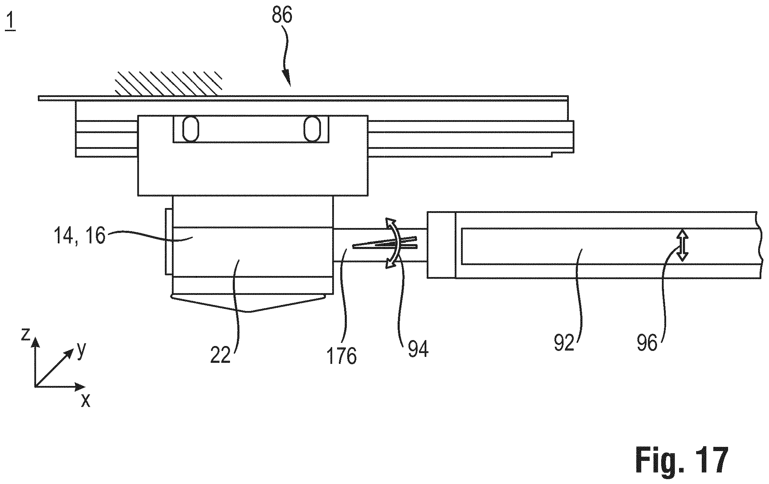

Die Linearmotoranordnung 1 aus Figur 17 weist im Unterschied zur Ausführungsform in Figur 9 keine Einkerbungen, sondern ein Stabelement (Rundstab) 176 auf. Dieses verbindet den Betätigungsabschnitt 22 mit dem Aktorabschnitt 92. Das Stabelement 176 erstreckt sich hierbei im Wesentlichen in Längsrichtung. Winkelfehler 94 können damit insbesondere in Querrichtung (y-Achse) und in einer Richtung senkrecht zur Quer- und Längsrichtung (z-Achse) kompensiert werden. Ein Material, ein Durchmesser und eine Länge des Stabelements 176 bestimmen hierbei die maximal zulässige Winkelabweichung. Die Verbindung des Stabelements 176 kann form- und/oder stoff- und/oder kraftschlüssig beispielsweise durch Schweißen, Klemmen oder Schrauben erfolgen. Ein minimaler Durchmesser des Stabelements 176 ist abhängig von einer maximal zulässigen Zug- und Druckspannung des verwendeten Materials und der zu übertragenden Kräfte. Des Weiteren können mit dem Stabelement 176 Montagefehler/Fertigungstoleranzen 96 ausgeglichen werden.

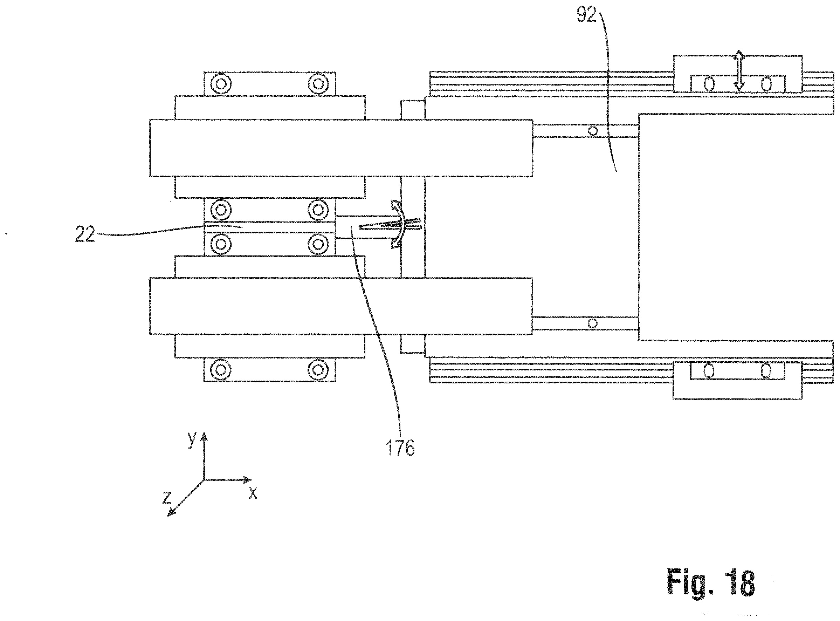

Gemäß Figur 18 ist ersichtlich, dass das Stabelement 176 etwa mittig zwischen dem Betätigungsabschnitt 22 und dem Aktorabschnitt 92 angeordnet ist.

Offenbart ist eine Linearmotoranordnung für eine Nibbelmaschine. Diese hat einen Linearmotor mit zwei auf einer Trägerplatte eines Schlittens angeordneten Sekundäreinheiten, denen jeweils eine Primäreinheit zugeordnet ist. Die Trägerplatte ist somit sandwichartig zwischen den Primäreinheiten angeordnet. Der Schlitten ist zumindest über eine Linearführung längsverschieblich geführt und gelagert. Endseitig kann er eine Betätigungskraft auf ein Werkzeug aufbringen, wobei die Betätigungskraft im Wesentlichen senkrecht zu seiner Längsachse wirkt.

### Bezuaszeichenliste

- 1: Linearmotoranordnung
- 2: Schlitten
- 3: Linearmotor
- 4: Schlittenseite
- 6: Magnetanordnung
- 8: Schlittenseite
- 10: Magnetanordnung
- 11: Trägerplatte
- 12: Verbindungssteg
- 14: Steg
- 16: Steg
- 18: Wicklungsanordnung
- 20: Wicklungsanordnung
- 22: Betätigungsabschnitt
- 24: Stegseite
- 26: Stegseite
- 28: Führungsschiene
- 30: Führungsschiene
- 31: Linearführung
- 32: Führungswagen
- 34: Führungswagen
- 36: Führungswagen
- 38: Führungswagen
- 40: Betätigungsseite
- 42: Keil
- 44: Führungswagen
- 46: Führungswagen
- 47: Linearführung
- 48: Führungsschiene
- 50: Führungsschiene
- 52: Linearführung
- 54: Längenmesssystem
- 56: Aufnehmer
- 58: Geber
- 60: Stegseite
- 62: Antriebsregler
- 64: Leitungen
- 66: Anschluss
- 68: Anschluss
- 70: Leitung
- 72: erste Keilfläche
- 74: zweite Keilfläche
- 76: Werkzeug
- 78: Wälzkörper
- 80: Aussparungen
- 82: Richtung
- 84: erste Linearführung
- 86: zweite Linearführung
- 88: Einkerbung
- 90: Einkerbung
- 92: Aktorabschnitt
- 94: Winkelfehler
- 96: Montagefehler
- 98: Kulissen
- 100: Kulissenbahn
- 102: Kulissenbahn
- 104: Wälzkörper
- 106: Stützelement
- 108: Stützflächen
- 110: Stützflächen
- 112: Wälzkörper
- 114: Verzahnung
- 116: Verzahnung
- 118: Betätigungselement
- 120: Schwenkachse
- 122: Hebel
- 124: Schwenkachse
- 126: Kniehebelvorrichtung
- 128: Hebel
- 130: Schwenkachse
- 132: Werkzeug
- 134: Schwenkachse
- 136: Linearmotor
- 138: Linearmotor
- 140: Hebel
- 142: Hebel
- 144: Werkzeug
- 150: Keilanordnung
- 152: Keilanordnung
- 154: Keil
- 156: Keil
- 158: Keil
- 160: Keil
- 162: Keil
- 164: Keilflächen
- 166: Wälzkörper
- 168: Führungswagen
- 170: Führungswagen
- 172: Führungswagen
- 174: Führungswagen
- 176: Stabelement

## Patentansprüche

1. Linearmotoranordnung zum Aufbringen einer Betätigungskraft auf ein Werkzeug (76) einer Werkzeugmaschine und zu dessen Betätigung mit zumindest einem elektrischen Linearmotor (3), der einen Schlitten (2) aufweist, der über eine Linearführung (28 bis 38) in einer Längsrichtung verschiebbar geführt ist, **dadurch gekennzeichnet, dass** auf voneinander wegweisenden Schlittenseiten (4, 8) jeweils eine Sekundäreinheit (6, 10) vorgesehen ist, denen jeweils gegenüberliegend eine Primäreinheit (18, 20) zugeordnet ist, wobei über den Schlitten (2) die Betätigungskraft auf das Werkzeug (76) aufbringbar und das Werkzeug betätigbar ist, wobei der Schlitten (2) über die Linearführung (28 bis 38) beim Aufbringen der Betätigungskraft abgestützt ist.

2. Linearmotoranordnung nach Anspruch 1, wobei die Sekundäreinheit eine Magnetanordnung (6, 10) und die Primäreinheit eine Wicklungsanordnung (18, 20) ist.

3. Linearmotoranordnung nach Anspruch 1 oder 2, wobei die Linearführung (28 bis 38) zwei parallel zueinander angeordnete Führungsschienen (28, 30) aufweist, die mit dem Schlitten (2) fest verbunden sind, wobei eine jeweilige Führungsschiene (28, 30) in zumindest einem Führungswagen (32 bis 38) geführt ist.

4. Linearmotoranordnung nach einem der vorhergehenden Ansprüche, wobei der Schlitten (2) einen Betätigungsabschnitt (22) mit einer Betätigungsseite (40) zum Aufbringen der Betätigungskraft aufweist, wo im Bereich des Betätigungsabschnitts (22) zumindest ein weiterer Führungswagen (44, 46) zur Abstützung vorgesehen ist.

5. Linearmotoranordnung nach einem der vorhergehenden Ansprüche, wobei die Sekundär- und Primäreinheiten (6, 10, 18, 20) im Wesentlichen symmetrisch zum Schlitten (2) angeordnet sind und Magnetkräfte im Wesentlichen gleich sind.

6. Linearmotoranordnung nach einem der vorhergehenden Ansprüche, wobei die Linearführung (28 bis 38) als Kugel- oder Rollenumlaufführung ausgestaltet ist, so dass sie eine vergleichsweise geringe Trägheit beim Verschieben des Schlittens (2) aufweist.

7. Linearmotoranordnung nach einem der vorhergehenden Ansprüche, wobei der Linearmotor (3) für beide Wicklungsanordnungen (18, 20) einen gemeinsamen Antriebsregler (62) aufweist.

8. Linearmotoranordnung nach einem der vorhergehenden Ansprüche, wobei ein Längenmesssystem (54) vorgesehen ist, das in dem Bereich des Linearmotors (3) angeordnet ist, in dem vergleichsweise geringe Vibrationen und Schwingungen auftreten.

9. Linearmotoranordnung nach einem der Ansprüche 4 bis 8, wobei die Führungswägen (32 bis 38) der Führungsschienen (28, 30) des Schlittens (2) im Querschnitt gesehen etwa U-förmig ausgestaltet sind und in eine Richtung geöffnet sind, in die etwa die Betätigungsseite (40) weist.

10. Linearmotoranordnung nach einem der Ansprüche 4 bis 9, wobei am Betätigungsabschnitt (22) ein Keil (42) vorgesehen ist, auf dem das Werkzeug (76) abstützbar ist, wobei der Keil (42) derart angeordnet ist, dass bei einer Verschiebung des Schlittens (2) in eine erste Längsrichtung das Werkzeug (76) mit einer Betätigungskraft beaufschlagbar ist, oder wobei am Betätigungsabschnitt (22) eine Kulisse (98) vorgesehen ist, in der das Werkzeug (76) derart geführt ist, dass bei einer Verschiebung des Schlittens (2) in die erste Längsrichtung das Werkzeug (76) mit der Betätigungskraft beauschlagbar ist, oder wobei am Betätigungsabschnitt (22) eine Verzahnung (114) vorgesehen ist, die mit einer Verzahnung (116) eines verschwenkbar gelagerten Betätigungselements (118) kämmt, über das das Werkzeug bei einer Verschiebung des Schlittens (2) in die erste Längsrichtung mit der Betätigungskraft beaufschlagbar ist, oder wobei am Betätigungsabschnitt (22) eine Kniehebelvorrichtung (126) zum Betätigen des Werkzeugs (132) vorgesehen ist.

11. Linearmotoranordnung nach einem der vorhergehenden Ansprüche, wobei der Schlitten (2) eine mittels Ausfräsungen massenoptimierte Trägerplatte (11) hat.

12. Linearmotoranordnung nach einem der Ansprüche 4 bis 11, wobei der Schlitten (2) einen Verbindungsabschnitt (88, 90; 176) zwischen dem Betätigungsabschnitt (22) und einem die Sekundärteile (6, 10) aufweisenden Aktorabschnitt (92) aufweist, der derart ausgestaltet ist, dass eine Verschwenkbarkeit des Betätigungsabschnitts (22) relativ zu dem Aktorabschnitt (92) zugelassen ist.

13. Linearmotoranordnung nach einem der vorhergehenden Ansprüche, wobei zwei Linearmotoren (136, 138) vorgesehen sind, die im Wesentlichen gleich ausgestaltet sind, wobei die Schlitten (2) zum Beaufschlagen des Werkzeugs (144) mit der Betätigungskraft aufeinander zu oder voneinander weg bewegbar sind.

14. Werkzeugmaschine mit einer Linearmotoranordnung gemäß einem der vorhergehenden Ansprüche.

## Claims

1. Linear motor arrangement for applying an actuating force to a tool (76) of a machine tool and for the actuation thereof, having at least one electric linear motor (3), which has a slide (2) that is guided in a displaceable manner in a longitudinal direction via a linear guide (28 to 38), **characterized in that** a secondary unit (6, 10) is provided respectively on slide sides (4, 8) facing away from one another, each secondary unit (6, 10) being assigned an opposite primary unit (18, 20), wherein, via the slide (2), the actuating force is able to be applied to the tool (76) and the tool is able to be actuated, wherein the slide (2) is supported via the linear guide (28 to 38) upon application of the actuating force.

2. Linear motor arrangement according to Claim 1, wherein the secondary unit is a magnet arrangement (6, 10) and the primary unit is a winding arrangement (18, 20) .

3. Linear motor arrangement according to Claim 1 or 2, wherein the linear guide (28 to 38) has two guide rails (28, 30) that are arranged parallel to one another and are firmly connected to the slide (2), wherein a respective guide rail (28, 30) is guided in at least one guide carriage (32 to 38).

4. Linear motor arrangement according to one of the preceding claims, wherein the slide (2) has an actuating portion (22) with an actuating side (40) for applying the actuating force, where at least one further guide carriage (44, 46) is provided for support in the region of the actuating portion (22).

5. Linear motor arrangement according to one of the preceding claims, wherein the secondary and primary units (6, 10, 18, 20) are arranged substantially symmetrically to the slide (2) and magnetic forces are substantially identical.

6. Linear motor arrangement according to one of the preceding claims, wherein the linear guide (28 to 38) is configured as a recirculating ball or roller guide, such that it has comparatively low inertia upon displacement of the slide (2).

7. Linear motor arrangement according to one of the preceding claims, wherein the linear motor (3) has a common drive regulator (62) for both winding arrangements (18, 20) .

8. Linear motor arrangement according to one of the preceding claims, wherein a length measurement system (54) is provided, which is arranged in the region of the linear motor (3) in which comparatively low levels of vibration and oscillation occur.

9. Linear motor arrangement according to one of Claims 4 to 8, wherein the guide carriages (32 to 38) of the guide rails (28, 30) of the slide (2) are configured in an approximately U-shaped manner as seen in cross section and are open in a direction in which the actuating side (40) approximately faces.

10. Linear motor arrangement according to one of Claims 4 to 9, wherein a wedge (42) on which the tool (76) is able to be supported is provided at the actuating portion (22), wherein the wedge (42) is arranged in such a way that, upon displacement of the slide (2) in a first longitudinal direction, the tool (76) is able to be subjected to an actuating force, or wherein a guide slot (98) is provided at the actuating portion (22), the tool (76) being guided in said guide slot (98) in such a way that, upon displacement of the slide (2) in the first longitudinal direction, the tool (76) is able to be subjected to the actuating force, or wherein a toothing (114) is provided at the actuating portion (22), said toothing (114) meshing with a toothing (116) of a pivotably mounted actuating element (118), via which the tool is able to be subjected to the actuating force upon displacement of the slide (2) in the first longitudinal direction, or wherein a toggle lever device (126) for actuating the tool (132) is provided at the actuating portion (22).

11. Linear motor arrangement according to one of the preceding claims, wherein the slide (2) has a carrier plate (11) that is optimized in terms of mass by means of milled-out portions.

12. Linear motor arrangement according to one of Claims 4 to 11, wherein the slide (2) has a connecting portion (88, 90; 176) between the actuating portion (22) and an actuator portion (92) having the secondary parts (6, 10), which is configured such that pivotability of the actuating portion (22) relative to the actuator portion (92) is allowed.

13. Linear motor arrangement according to one of the preceding claims, wherein two linear motors (136, 138) are provided, which are configured in a substantially identical manner, wherein the slides (2) are movable towards or away from one another in order to apply the actuating force to the tool (144).

14. Machine tool having a linear motor arrangement according to one of the preceding claims.

## Revendications

1. Système de moteur linéaire servant à appliquer une force d'actionnement sur un outil (76) d'une machine-outil et, pour son actionnement, comportant au moins un moteur linéaire électrique (3) qui comprend un coulisseau (2) qui est guidé de manière mobile dans une direction longitudinale par le biais d'un guide linéaire (28 à 38), **caractérisé en ce qu'**une unité secondaire (6, 10) est prévue respectivement sur des côtés de coulisseau (4, 8) opposés l'un à l'autre, unités secondaires auxquelles est associée respectivement une unité primaire (18, 20), dans lequel, par le biais du coulisseau (2), la force d'actionnement peut être appliquée sur l'outil (76) et l'outil peut être actionné, dans lequel le coulisseau (2) est supporté par le biais du guide linéaire (28 à 38) en cas d'application de la force d'actionnement.

2. Système de moteur linéaire selon la revendication 1, dans lequel l'unité secondaire est un agencement magnétique (6, 10) et l'unité primaire est un agencement d'enroulements (18, 20).

3. Système de moteur linéaire selon la revendication 1 ou 2, dans lequel le guide linéaire (28 à 38) comprend deux rails de guidage (28, 30) disposés parallèlement l'un à l'autre, lesquels sont reliés solidement au coulisseau (2), dans lequel un rail de guidage respectif (28, 30) est guidé dans au moins un chariot de guidage (32 à 38) .

4. Système de moteur linéaire selon l'une des revendications précédentes, dans lequel le coulisseau (2) comprend une partie d'actionnement (22) dotée d'un côté d'actionnement (40) pour l'application de la force d'actionnement, où au moins un autre chariot de guidage (44, 46) est prévu pour le support dans la région de la partie d'actionnement (22).

5. Système de moteur linéaire selon l'une des revendications précédentes, dans lequel les unités secondaires et primaires (6, 10, 18, 20) sont disposées sensiblement symétriquement par rapport au coulisseau (2) et les forces magnétiques sont sensiblement identiques.

6. Système de moteur linéaire selon l'une des revendications précédentes, dans lequel le guide linéaire (28 à 38) est configuré comme guide à recirculation de billes ou de rouleaux, de telle sorte qu'il présente une inertie relativement faible en cas de déplacement du coulisseau (2).

7. Système de moteur linéaire selon l'une des revendications précédentes, dans lequel le moteur linéaire (3) comprend un régulateur d'entraînement commun (62) pour les deux agencements d'enroulements (18, 20).

8. Système de moteur linéaire selon l'une des revendications précédentes, dans lequel un système de mesure de longueur (54) est prévu, lequel est disposé dans la région du moteur linéaire (3) dans laquelle des vibrations et oscillations relativement faibles se produisent.

9. Système de moteur linéaire selon l'une des revendications 4 à 8, dans lequel les chariots de guidage (32 à 38) des rails de guidage (28, 30) du coulisseau (2) sont configurés approximativement en forme de U vus en section transversale et sont ouverts dans une direction dans laquelle le côté d'actionnement (40) est approximativement tourné.

10. Système de moteur linéaire selon l'une des revendications 4 à 9, dans lequel une cale (42) est prévue sur la partie d'actionnement (22), cale sur laquelle l'outil (76) peut être supporté, dans lequel la cale (42) est disposée de telle sorte qu'en cas de déplacement du coulisseau (2) dans une première direction longitudinale, l'outil (76) peut être soumis à une force d'actionnement, ou dans lequel une coulisse (98) est prévue sur la partie d'actionnement (22), coulisse dans laquelle l'outil (76) est guidé de telle sorte qu'en cas de déplacement du coulisseau (2) dans la première direction longitudinale, l'outil (76) peut être soumis à la force d'actionnement, ou dans lequel une denture (114) est prévue sur la partie d'actionnement (22), laquelle denture s'engrène avec une denture (116) d'un élément d'actionnement (118) monté pivotant, par le biais duquel l'outil peut être soumis à la force d'actionnement en cas de déplacement du coulisseau (2) dans la première direction longitudinale, ou dans lequel un dispositif à genouillère (126) pour l'actionnement de l'outil (132) est prévu sur la partie d'actionnement (22).

11. Système de moteur linéaire selon l'une des revendications précédentes, dans lequel le coulisseau (2) possède une plaque porteuse (11) de masse optimisée par des parties fraisées.

12. Système de moteur linéaire selon l'une des revendications 4 à 11, dans lequel le coulisseau (2) comprend une partie de liaison (88, 90 ; 176) entre la partie d'actionnement (22) et une partie actionneur (92) comprenant les parties secondaires (6, 10), laquelle partie actionneur est configurée de telle sorte qu'une mobilité en pivotement de la partie d'actionnement (22) par rapport à la partie actionneur (92) est autorisée.

13. Système de moteur linéaire selon l'une des revendications précédentes, dans lequel deux moteurs linéaires (136, 138) sont prévus, lesquels sont configurés de manière sensiblement identique, dans lequel les coulisseaux (2) peuvent être rapprochés ou éloignés l'un de l'autre pour soumettre l'outil (144) à la force d'actionnement.

14. Machine-outil comportant un système de moteur linéaire selon l'une des revendications précédentes.
